# EUROPEAN PATENT SPECIFICATION

(11) **EP 4 130 458 B1**
(45) Date of publication and mention of the grant of the patent: **15.04.2026**
(21) Application number: 21776068.5
(22) Date of filing: 22.03.2021
(51) Int. Cl.: F03D 3/06

(54) **VERTICAL AXIS WIND TURBINE**
WINDTURBINE MIT VERTIKALER ACHSE
ÉOLIENNE À AXE VERTICAL

(30) Priority: 27.03.2020 JP 2020057522
(43) Date of publication of application: 08.02.2023
(73) Proprietor: NTN Corporation, Osaka-shi, Osaka 550-0003 (JP)
(72) Inventor: MATSUNAGA, Kumiko, Kuwana-shi, Mie 511-0867 (JP)
(74) Representative: Cabinet Netter
(86) International application number: PCT/JP2021/011758
(87) International publication number: WO 2021/193555

(56) References cited:
- FR-A1- 2 473 642
- JP-A- 2009 275 536
- JP-A- 2017 096 307
- JP-A- 2017 096 307
- JP-A- 2019 206 925
- JP-B2- 4 514 502
- JP-B2- 6 644 649
- US-A- 4 566 854
- US-A1- 2013 183 164

## Description

### BACKGROUND OF THE INVENTION

### (Field of the Invention)

The present invention relates to a vertical axis wind turbine used in a wind power generation device. In particular, the present invention relates to a structure for fastening a blade to an arm.

### (Description of Related Art)

Some lighting facilities include a wind power generation device and a solar power generation device so as to serve as a street light which is supplied with electric power generated by the power generation devices described above to turn on a lighting device (for example, Patent Document 1). As a wind power generation device used in such a lighting facility, a vertical axis wind power generation device is installed, which does not require control in response to the wind direction and is employed in a relatively small wind turbine. This also applies to lighting facilities which do not include a solar power generation device and use only a wind power generation device to generate electric power.

Blades of a wind turbine are desired to be easily attached to the rotary shaft with sufficient strength. To achieve this object, a proposed configuration includes features that a root part of each wind turbine blade is incorporated with an embedded metal fitting with an internal threaded part, and the blade root part and a blade attaching plate at the outer periphery of the rotary shaft are fastened with bolts (Patent Document 2), although this is to an example application to a propeller-type horizontal axis wind turbine. To achieve an object of connecting blades and a wind turbine rotor of a wind turbine more rigidly, Patent Document 3 has offered a proposal, although this is also the case of a horizontal axis wind turbine. In the example of Patent Document 3, studs are joined to blade root parts of a wind turbine, and embedded metal fittings with cut female threads are joined to the studs. Bolts are inserted into the joined embedded metal fittings to fasten the blades to the wind turbine rotor at the center, so that the blades and the wind turbine rotor are joined more rigidly.

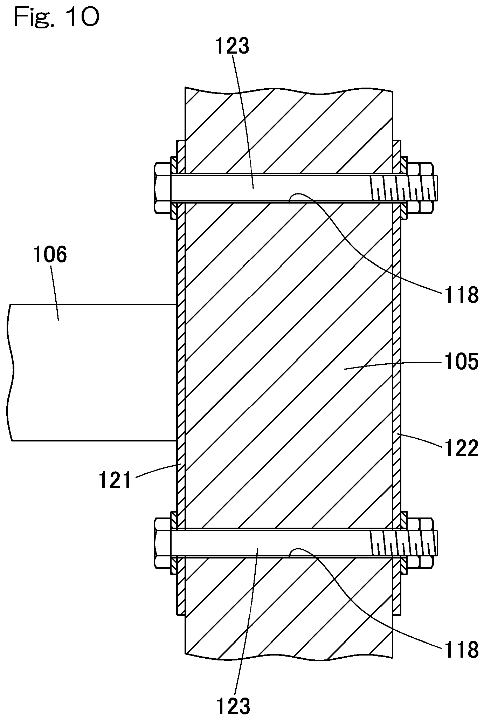

As for a vertical axis wind turbine of a wind power generation device, the configuration shown in Fig. 10 has been proposed. A rotor blade assembly of the vertical axis wind turbine includes a blade 105 and an arm 106 which is a metal support component. The resin blade 105 and the metal arm 106 are fastened with bolts 123. In this example, a blade support component 121 at a tip end of the arm 106 and a blade engaging member 122 are provided to hold the blade 105 from both sides, and the bolts 123 are fastened thereto.

### [Related Document]

### [Patent Document]

[Patent Document 1] JP Laid-open Patent Publication No. 2017-190751
[Patent Document 2] JP Laid-open Patent Publication No. H11-182408
[Patent Document 3] JP Laid-open Patent Publication No. 2003-293935

Both the technologies disclosed in Patent Documents 1 and 2 are intended for propeller-type horizontal axis wind turbines and include connecting, to the wind turbine rotor or the rotary shaft at the center, the root parts of the blades which extend radially around the wind turbine rotor or the rotary shaft. Thus, these technologies cannot be applied to connections of middle parts of vertical blades to arms in vertical axis wind turbines.

US2013/183164A1, JP6644649B2, US4566854A, JP4514502B2, FR2473642A1 and JP 2017096307A are further relevant examples of prior art.

The connecting structure shown in Fig. 10 is an example applied to a vertical axis wind turbine but has the following problem. The blade 105 used in the vertical axis wind turbine is flexible because it is made of a resin, so that the strength of the blade 105 may become insufficient near the areas where the blade 105 is fastened in a case where the bolts 123 are over-tightened. For this reason, the bolts 123 are fastened with low torque; in this case, however an appropriate axial force cannot be retained. This could result in loosening of the bolts 123 and/or falling of the blade 105 from the blade support component 121 due to loosening of the bolts 123.

To prevent loosening of the bolts 123 fastened with low torque, Hardlock (Registered Trademark) nuts or double nuts may be used in some instances. In either case, large protrusions are created on the blade surface. Protrusions on the blade surface impede rotation of the wind turbine and thereby deteriorate power generation performance of the wind power generation device. Therefore, it is necessary to reduce or minimize the protrusions. In addition, rainwater could enter from bolt holes 118 for fastening the blade 105 and the support component 121. For example, in a case where the blade 105 is hollow, entry of water into the blade 105 may disturb the weight balance of the wind turbine, which could adversely affect strength of the generator and/or vibration of the support column.

### SUMMARY OF THE INVENTION

The present invention solves the above problem, and an object of the present invention is to make it possible to retain sufficient strength of a vertical axis wind turbine and fasten blades and blade support components of the wind turbine more simply and rigidly.

The present invention provides a vertical axis wind turbine for wind power generation, the vertical axis wind turbine including: a vertical rotary shaft, a plurality of vertical blades arranged around the rotary shaft, an arm attaching the plurality of vertical blades to the rotary shaft, and
blade attaching units attaching the blades to the arm, each blade attaching unit including:
   a blade support component disposed at a tip end of the arm and overlaid on a rotation center-side surface of one of the blades;
   a collar having a cylindrical shape and inserted into an attachment hole penetrating that blade;
   a blade engaging body provided separately from or integrally with the collar and overlaid on an opposite surface of that blade to the rotation center-side surface; and
   a bolt inserted into the collar to apply an axial force so as to hold that blade between the blade support component and the blade engaging body,
wherein the collar supports the axial force acting between the blade support component and the blade engaging body.

According to this constitution, the cylindrical collar inserted into the attachment hole of the blade supports the axial force of the bolt penetrating the blade and acting between the blade support component and the blade engaging body. Thus, the bolt can be fastened with an appropriate axial force, without the risk of deforming the blade due to the axial force of the bolt, even where the blade is made of a flexible material such as a resin. This makes it possible to retain sufficient strength, to firmly fasten the blade and the blade support component, and to prevent loosening of the bolt resulting from the tendency of the blade to deform depending on the material of the blade. Thus, the bolt can be fastened in a simpler manner without the need for an anti-loose unit and thereby without increasing protrusion from the blade surface due to such an anti-loose unit. Further, use of the cylindrical collar can provide a waterproof effect against water entry from the fastening area into the blade.

In the present invention, the collar may penetrate the blade support component and the blade engaging body.

Where the collar penetrates the blade support component and the blade engaging body, the blade support component and the blade engaging body as well as opposite end faces of the collar can provide seat surfaces for fastening the bolt. This makes it possible to support the axial force more rigidly.

In the present invention, opposite end faces of the collar may be placed in contact with surfaces of the blade support component and the blade engaging body by which the blade support component and the blade engaging body are in contact with the blade. According to this configuration, the blade with the collar fitted into the attachment hole can be held or sandwiched between the blade support component and the blade engaging body, and the bolt can be fastened thereto. This configuration also makes it possible to support the axial force rigidly.

In the present invention, the collar may include a female thread part on an inner periphery of the collar, and the bolt may be screw into the female thread part of the collar. According to this configuration, the female thread part formed inside the collar can provide more rigid fastening and eliminate the necessity of a Hardlock nut or a double nut as an anti-loose component, so that protrusions can be reduced on the surface of the wind turbine blade.

In the present invention, the collar may include a flange part at least at an end portion thereof opposite from the blade support component, and the flange part may serve as the blade engaging body. Conventionally, a blade engaging body as an independent component is overlaid on a blade in order to increase a contact area to reduce a surface pressure on the blade for the purpose of protecting the blade. In contrast, use of the cylindrical collar makes it possible to support the axial force of the bolt by the collar as described above, so that it is not necessary to increase a contact area in order to reduce a surface pressure on the blade. Thus, the axial force can be sufficiently supported over no more than the contact area of the flange part of the collar. In addition, use of the collar including the female thread part eliminates the necessity of a nut. For these reasons, the flange part of the collar can be used as the blade engaging body; an independent component serving as the blade engaging body is no longer necessary; and a nut protruding from the blade surface is no longer necessary, so that the protrusions from the blade surface can be reduced. Thus, the conventional protrusions from the blade surface due to the blade engaging body and the nut can be reduced to the blade engaging body provided in the form of the flange part of the collar. Accordingly, the protrusions from the blade surface can be reduced, which leads to reduced rotation resistance and improved power generation performance. In addition, an independent blade engaging body and a nut are no longer needed, making it possible to reduce the number of components and the cost.

In the present invention, the bolt may be a low-profile type bolt. Where a low-profile type bolt is used, connection between the blade and the blade support component results in a smaller protrusion from the blade surface, which leads to reduced resistance against rotation of the wind turbine and thereby prevents deterioration in power generation performance due to the rotation resistance caused by the protrusion. As used herein, the "low-profile type" bolt includes commercially available low-profile bolts as well as bolts which are regarded as having a low-profile because of the shape of the bolt head, such as a pan head and a countersunk head.

In the present invention, the vertical axis wind turbine may include a solar power generation device. Where the wind turbine includes a solar power generation device, a combination of wind power generation and solar power generation can generate a large amount of power with a compact configuration and makes it possible to generate power as long as there is sunlight even when there is no wind.

In the present invention, the vertical axis wind turbine may include a generator configured to generate power by rotation of the rotary shaft to which the blades are attached, and one or both of a lighting facility configured to provide illumination using the power generated by the generator and an electric device other than the lighting facility, the electric device being configured to operate using the power generated by the generator. Where the vertical axis wind turbine includes a lighting facility, the wind turbine can provide illumination without a cable connected to a commercial power source, so that it can be installed as a streetlight or the like in an area or a location where there is no wiring leading to a commercial power source.

The present invention encompasses any combination of at least two features disclosed in the claims and/or the specification and/or the drawings.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views. In the figures,
Fig. 1 is a perspective view of a wind power generation device including a vertical axis wind turbine according to a first embodiment of the present invention;
Fig. 2 is a sectional view of a blade of the vertical axis wind turbine;
Fig. 3 is an exploded perspective view illustrating a relation between the blade and bolt collars for attaching the blade;
Fig. 4 shows a section illustrating a connecting part between a blade and an arm in the vertical axis wind turbine;
Fig. 5 is an enlarged sectional view of part V of Fig. 4;
Fig. 6 is a sectional view showing a variant of the blade attaching unit of the vertical axis wind turbine;
Fig. 7 is a sectional view showing another variant of the blade attaching unit of the vertical axis wind turbine;
Fig. 8 is a sectional view showing yet another variant of the blade attaching unit of the vertical axis wind turbine;
Fig. 9 is a perspective view of a collar in the blade attaching unit; and
Fig. 10 is a sectional view showing a conventional example of a blade attaching unit of a vertical axis wind turbine.

### DESCRIPTION OF THE EMBODIMENTS

### <Overall Construction of Vertical Axis Wind Turbine>

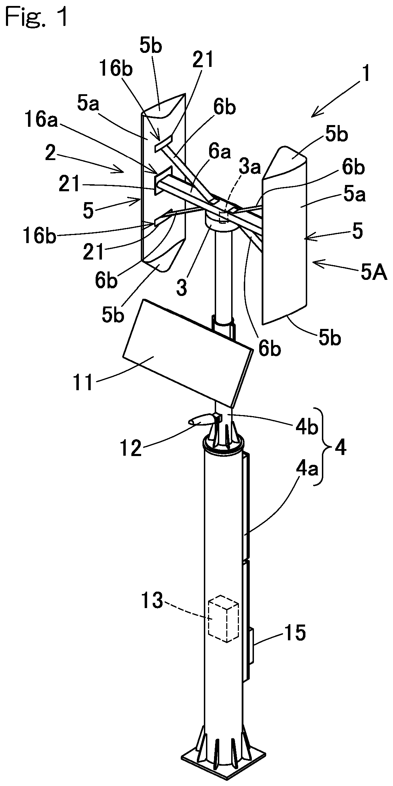

A first embodiment of the present invention is described with reference to Fig. 1 to Fig. 6. In Fig. 1, a vertical axis wind turbine 2 includes a rotor blade assembly 5A, a support column 4 which supports the rotor blade assembly 5A at an upper end thereof, and a generator 3 to constitute a wind power generation device 1.

In the vertical axis wind turbine 2, a plurality of vertical blades 5 (two blades in the illustrated example) are attached to a vertical rotary shaft 3a by arms 6a, 6b. The plurality of blades 5 and the arms 6a, 6b constitute the rotor blade assembly 5A. The support column 4 includes a large-diameter part 4a located on a lower side and a small-diameter part 4b located on an upper side, each of the large-diameter part and the small-diameter part having a cylindrical shape. The generator 3 is mounted in an upper end portion of the support column which protrudes from an upper end of the small-diameter part 4b. The arms 6a are main arms extending horizontally. The arms 6b are auxiliary arms located above and below the main arms 6a. Each of the arms 6b includes a base end connected to a base end of a main arm 6a or to the rotary shaft 3a and extends diagonally upward or diagonally downward such that a tip end of that arm is connected to a blade 5.

The generator 3 is, for example, a permanent magnet synchronous generator and includes a stator arranged at the upper end of the support column 4. The rotary shaft 3a is a rotary shaft of a rotor (not illustrated) of the generator 3 or a shaft connected to the rotor and is rotatably supported inside the small-diameter part 4b of the support column 4 through a bearing (not illustrated).

### <Auxiliary Facilities>

The vertical axis wind turbine 2 according to the present embodiment includes a panel-like solar power generation device 11 and a lighting facility 12 arranged on an upper part of the support column 4 as well as a storage battery 13 arranged inside or outside of the large-diameter part 4a of the support column 4, so that the vertical axis wind turbine is used as a street light or the like. Electric power generated from wind energy by the generator 3 and electric power generated from solar energy by the solar power generation device 11 are both stored in the storage battery 13 and are used to light the lighting facility 12 at night. The lighting facility 12 includes a light source (not illustrated) such as an LED. The lighting facility 12 may use direct current or alternating current for lighting. Where alternating current is used for lighting, the lighting facility includes an inverter (not illustrated) which converts direct current power of the storage battery 13 into alternating current power.

The support column 4 additionally includes an electric device(s) other than the lighting facility, which operates using electric power stored in the storage battery 13. Only either one of the lighting facility 12 and the electric device other than the lighting facility may be provided. Both the lighting facility 12 and the electric device other than the lighting facility may be omitted. Where both are omitted, the wind power generation device 1 is used, e.g., to supply power to surrounding facilities, to generate power for selling, etc.

### <Construction of Blades 5>

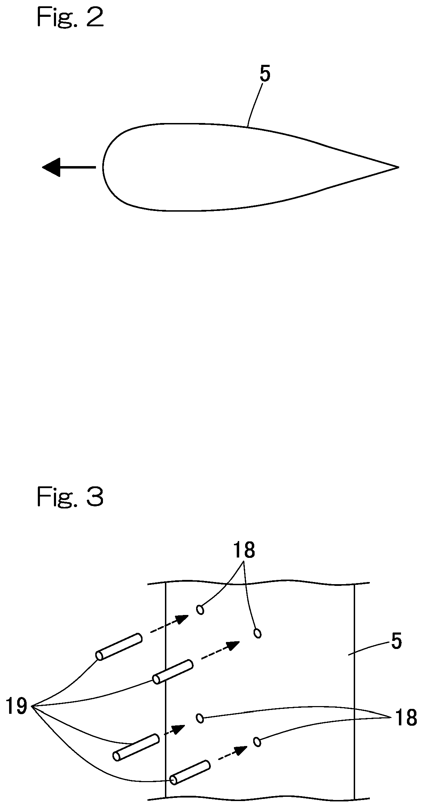

Each blade 5 includes a main blade part 5a extending in the vertical direction and a pair of blade tip end parts 5b, 5b extending from upper and lower ends of the main blade part 5a and inclined in such a way that their tip ends are located closer to the center of rotation of the main blade part 5a. The main blade part 5a has a lift-type shape in sectional view as shown in Fig. 2 throughout the entirety of the main blade part in the longitudinal direction. More specifically, the main blade part 5a has a substantially fish shape which bulges more in the front part thereof in the rotation direction (i.e., the direction indicated by the arrow) with respect to the center in the blade widthwise direction and becomes gradually thinner toward the rear. In the case of the lift type, the rotation direction of the blades 5 is fixed. The sectional shape of the main blade part 5a may be a drag-type shape such as a flat plate shape.

Each of the blade tip end parts 5b, 5b is shaped so as to have a gradually decreasing blade width toward the tip end thereof. Each of the blade tip end parts 5b, 5b may have a fish-like shape in sectional view similar to that of the main blade part 5a or a flat plate-like shape in sectional view. Where each of the blade tip end parts 5b, 5b has a fish-like shape in sectional view similar to that of the main blade part 5a, the blade tip end part becomes thinner in sectional view as the blade width becomes smaller.

The blades 5 are made of a resin material such as fiber reinforced plastic. The blades 5 are solid in the present embodiment. However, the blades may be hollow.

### <Blade Attaching Units 16a, 16b for Attaching Blades 5 to Arms 6a, 6b>

Fig. 3 to Fig. 6 show construction of blade attaching units 16a, 16b for attaching the blades 5 shown in Fig. 1 to the arms 6a, 6b. Since the blade attaching units 16a for attachment to the arms 6a which are the main arms and the blade attaching units 16b for attachment to the arms 6b which are the auxiliary arms are the same except for their dimensions, the blade attaching units 16a for attachment to the main arms 6a is described, while description of the blade attaching units 16b for attachment to the auxiliary arms 6b is omitted.

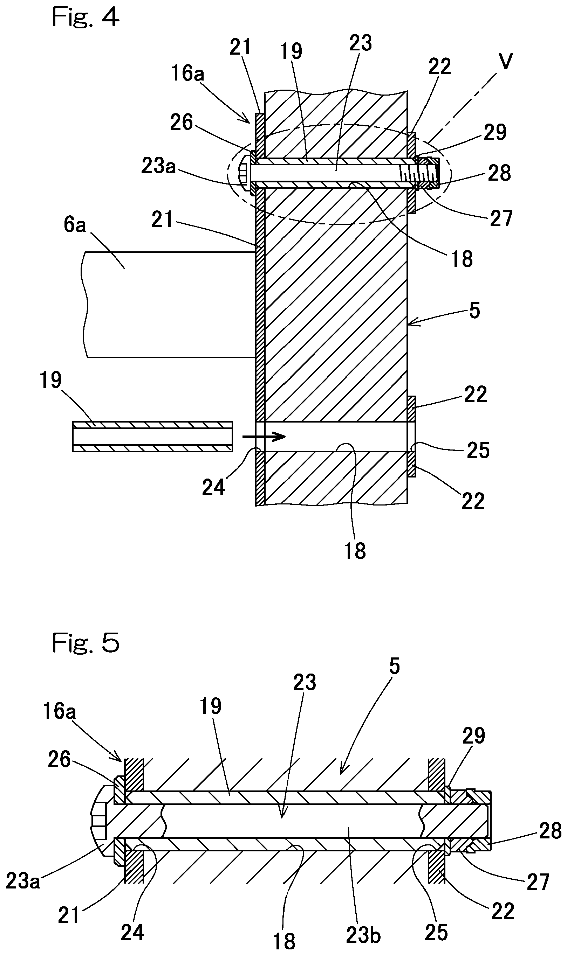

As shown in Fig. 4, each blade attaching unit 16a for attaching a blade 5 to an arm 6a includes: a blade support component 21 disposed at the tip end of that arm 6a and overlaid on a rotation center-side surface of that blade (i.e., one of the blades); a plurality of cylindrical collars 19 inserted respectively into a plurality of attachment holes 18 penetrating that blade 5 from the front to the rear; blade engaging bodies 22 separate from the collars 19 and overlaid on the opposite surface of that blade 5 to the rotation center-side surface; and bolts 23 inserted into the collars 19 to apply an axial force so as to hold or to sandwich this blade 5 between the blade support component 21 and the blade engaging bodies 22. The collars 19 support the axial force acting between the blade support component 21 and the blade engaging bodies 22.

The blade support component 21 may be a member which is attached to the tip end of an arm 6a integrally with that arm 6a, or be a member which is separate from an arm 6a and is welded or fixed with bolts (not illustrated) to an arm 6a. The blade support component 21 has a plate-like shape as shown in Fig. 4 and includes a plurality of insertion holes 24 (see Fig. 5) arranged so as to be aligned or fit together with the attachment holes 18 of the blade 5.

Each of the blade engaging bodies 22 is a member for increasing a contact area to reduce a surface pressure on the blade 5 in order to protect the blade 5 from the fastening axial force of the bolts 23 and is constituted by a plate member or the like. Separate blade engaging bodies 22 may be provided to the individual attachment holes 18 of the blade 5. Alternatively, the blade engaging body 22 may be a member having insertion holes 25 aligned with the plurality of attachment holes 18.

The collars 19 may be made of a metal such as stainless steel, carbon steel, and aluminum, or may be made of a ceramic material or a resin. The collars 19 are made of a material harder than that of the blades 5. The inner and outer diameters of each collar 19 are set so as to minimize gaps between the collar and an inner peripheral surface of an attachment hole 18 and between the collar and an outer peripheral surface of a bolt 23, while permitting smooth insertion into and removal of the collar from the attachment hole 18 as well as smooth fastening and removal of a bolt 23 to/from the collar.

In the present embodiment, as shown in Fig. 5 which shows part V of Fig. 4 in an enlarged manner, each collar 19 penetrates the blade support component 21 and the blade engaging body 22. The length of each collar 19 is equal to the sum of the thicknesses of the blade 5, the blade support component 21 and the blade engaging body 22 arranged in an overlapping manner. Since the thickness of the blade 5 varies in different parts in the blade widthwise direction because the blade 5 has a fish shape, each individual collar 19 has a length corresponding to the sum of the thicknesses mentioned above at a position where an attachment hole 18 is defined in the blade 5.

Each bolt 23 includes a head part 23a which is engaged with the surface of the blade support component 21 through a washer 26. To a tip-side end portion of a shaft part 23b of the bolt 23, a first nut 27 and an anti-loose nut 28 are screwed doubly, and the first nut 27 is engaged with the blade engaging body 22 through a washer 29. Since the length of each collar 19 is equal to the sum of the thicknesses of the blade 5, the blade support component 21 and the blade engaging body 22 arranged in an overlapping manner as described above, the washers 26, 29 make contact with the end faces of the collar 19 and faces of the blade support component 21 and the blade engaging body 22, respectively.

### <Effects>

According to this constitution, the cylindrical collars 19 inserted into the attachment holes 18 of the blade 5 supports the axial force of the bolts acting between the blade 5, the blade support component 21 and the blade engaging bodies 22. Thus, the bolts 23 can be fastened with an appropriate axial force, without the risk of deforming the blade 5 made of a resin due to the axial force of the bolts 23. This makes it possible to firmly fasten the blade 5 and the blade support component 21 while retaining sufficient strength. This also makes it possible, even where the blade 5 is made of a resin, to prevent loosening of the bolts 23 due to the tendency of the blade 5 to deform. Thus, the bolts can be fastened in a simpler manner without the need for providing an anti-loose unit and thereby without increasing protrusion from the surface of the blade 5 due to such an anti-loose unit. Further, use of the cylindrical collars 19 can provide a waterproof effect against water entry from the fastening areas into the blade 5.

In the case of this embodiment, each collar 19 penetrates the blade support component 21 and the blade engaging body 22. According to this configuration, the blade support component 21, the blade engaging body 22, and the opposite end faces of the collar 19 can provide seat surfaces for fastening the bolt 23. This makes it possible to support the axial force more rigidly.

### <Other Embodiments>

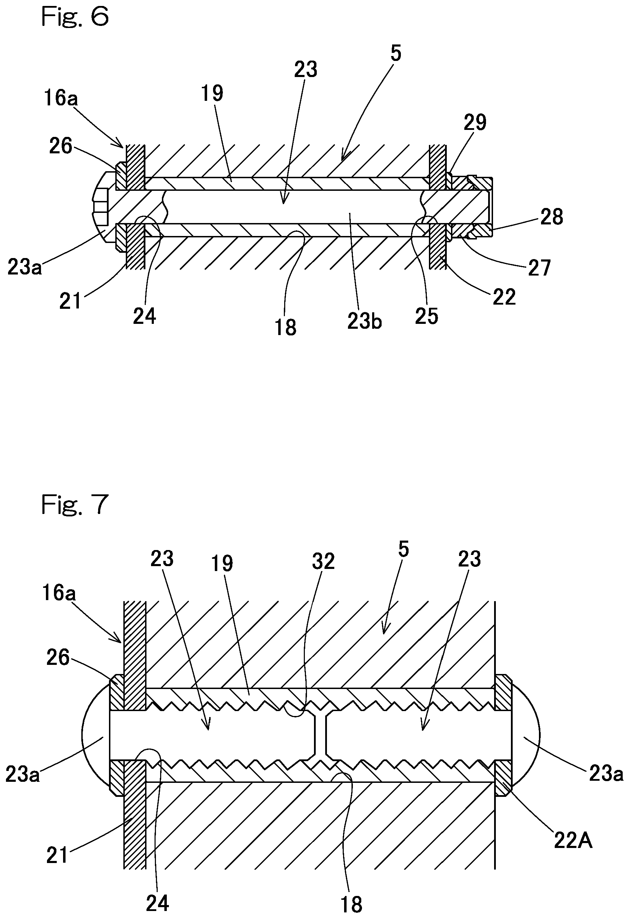

Fig. 6 to Fig. 8 show attaching units 16a in various embodiments in which the blade attaching units 16a have different configurations from each other. These embodiments are the same as the first embodiment unless otherwise specifically described.

In the embodiment of Fig. 6, the length of each collar 19 and the insertion holes 25 in the blade support component 21 and the blade engaging body 22 are adapted in such a way that the opposite end faces of the collar 19 are placed in contact with the surfaces, of the blade support component 21 and the blade engaging body 22, by which the blade support component 21 and the blade engaging body 22 are in contact with the blade 5. According to this configuration, the blade 5 with the collar 19 fitted in the attachment hole 18 can be held between the blade support component 21 and the blade engaging body 22, and the bolt 23 can be fastened thereto. This configuration also makes it possible to support the axial force rigidly.

In the embodiment of Fig. 7, each collar 19 includes a female thread part 32 on an inner peripheral surface, and a pair of bolts 23, 23 are screwed into the collar 19 from both sides. The blade engaging body 22A is a washer provided to each bolt hole 18. Respective head parts 23a, 23a of the bolts 23, 23 may be shaped as button bolt heads with hexagon sockets or smooth, low-profile type bolt heads such as ultra-low-profile bolt heads.

According to this configuration, since each collar 19 includes the female thread part 32 for fastening the bolt 23, fastening can be more rigid than in a typical configuration with nuts. In addition, since the collar 19 also serves as a nut, it is not necessary to separately provide a nut which protrudes from the blade surface. This makes it possible to reduce protrusions on the blade surface and further to employ low-profile type bolt heads as the head parts 23a of the bolts 23, as described above. Thus, protrusions on the blade surface can be reduced, which leads to reduced resistance against rotation of the blade 5 and to improved power generation performance of the wind power generation device 1. It should be noted that, in this embodiment, the length of the female thread part 32 may be at least about 1/3 of the length of the collar 19, or the female thread part 32 in the illustrated example extends over the entire length of the collar 19.

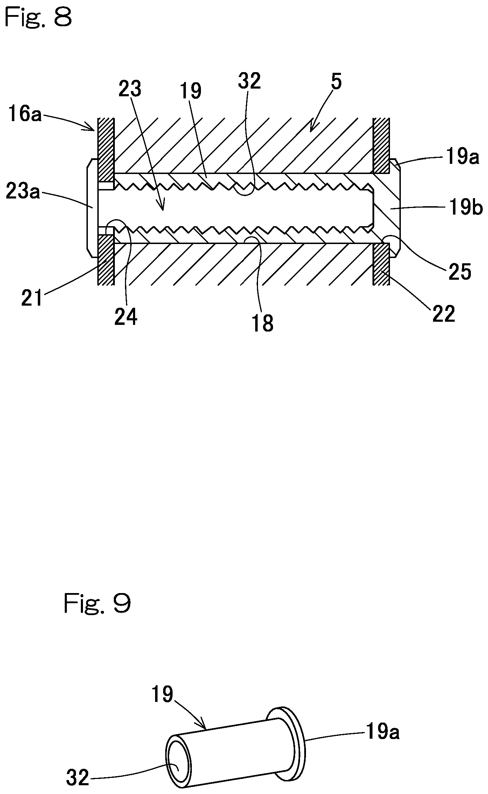

In the embodiment shown in Fig. 8 and Fig. 9, each collar 19 includes a female thread part 32 extending over the entire length of that collar on an inner periphery, and each collar 19 also includes a flange part 19a on an outer periphery of an end portion of that collar opposite to a side from which the bolt is inserted. The flange part 19a is in contact with a part of the surface of a blade engaging body 22 around an insertion hole 25. The end face of the collar 19 on the side of the flange part 19a is closed by a bottom part 19b. The bolt 23 is screwed into the female thread part 32 of the collar 19, and the head part 23a is in contact with a part of the surface of the blade support component 21 around an insertion hole 24. The head part 23a of the bolt 23 has a low-profile such as a pan head.

According to this configuration, the flange part 19a of the collar 19 is engaged with the blade engaging body 22, and a nut does not protrude on the side of the blade engaging body 22. Thus, protrusions on the blade surface are reduced, which leads to reduced resistance against rotation of the blade 5 and to improved power generation performance of the wind power generation device 1. This also reduces the number of components. In addition, use of the low-profile type head part 23a of the bolt 23 also reduces resistance against rotation of the blade 5. In this embodiment, the female thread part 32 of the collar 10 extends over the entire length of the collar 10. However, the female thread part 32 may extend over at least about 1/3 of the length of the collar.

In this embodiment, the separate blade engaging body 22 may be omitted, and the flange part 19a of the collar 19 may be used as a blade engaging body which comes into contact with the surface of the blade 5. Use of the cylindrical collars 19 makes it possible to support the axial force of the bolts by the collars 19 as in the embodiment, so that it is not necessary to increase a contact area in order to reduce a surface pressure on the blade 5. Thus, the axial force can be sufficiently supported over no more than the contact area of the flange part 19a of the collar 19. Omission of the separate blade engaging body 22 results in reduced protrusions from the blade surface by an amount protruding therefrom due to the presence, if existing, of the blade engaging body 22 and thereby reduced resistance against rotation of the blade 5.

Although the present invention has been described in connection with the embodiments thereof, the embodiments disclosed herein are merely examples in all respects, and are not to be taken as limiting the scope of the present invention in any way whatsoever. The scope of the present invention is to be determined by the appended claims, not by the above description, and is intended to include any change made within the scope of claims.

### [Reference Numerals]

- 1: wind power generation device
- 2: vertical axis wind turbine
- 3: generator
- 4: support column
- 5: blade
- 5A: rotor blade assembly
- 5a: main blade part
- 5b: inclined part
- 6a, 6b: arm
- 11: solar power generation device
- 12: lighting facility
- 13: storage battery
- 16a, 16b: blade attaching unit
- 18: attachment hole
- 19: collar
- 19a: flange part
- 19b: bottom part
- 21: blade support component
- 22, 22A: blade engaging body
- 23: bolt
- 23a: head part
- 23b: shaft part
- 24, 25: insertion hole
- 26: washer
- 27, 28: nut
- 29: washer
- 32: female thread part
- 105: blade
- 106: arm
- 118: bolt hole
- 121: blade support component
- 122: blade engaging member
- 123: bolt

## Claims

1. A vertical axis wind turbine (2) for wind power generation, the vertical axis wind turbine (2) comprising: a vertical rotary shaft, a plurality of vertical blades arranged around the rotary shaft, an arm attaching the plurality of vertical blades to the rotary shaft, and
blade attaching units (16a, 16b) attaching the blades to the arm, each blade attaching unit including:
a blade support component (21) disposed at a tip end of the arm and overlaid on a rotation center-side surface of one of the blades;
**characterized in that** each blade attaching unit further includes:
a collar (19) having a cylindrical shape and inserted into an attachment hole penetrating that blade;
a blade engaging body (22, 22A) provided separately from or integrally with the collar (19) and overlaid on an opposite surface of that blade to the rotation center-side surface; and
a bolt inserted into the collar (19) to apply an axial force so as to hold that blade between the blade support component (21) and the blade engaging body (22, 22A),
wherein the collar (19) supports the axial force acting between the blade support component (21) and the blade engaging body (22, 22A).

2. The vertical axis wind turbine (2) as claimed in claim 1, wherein the collar (19) penetrates the blade support component (21) and the blade engaging body (22, 22A).

3. The vertical axis wind turbine (2) as claimed in claim 1, wherein opposite end faces of the collar (19) are placed in contact with surfaces of the blade support component (21) and the blade engaging body (22, 22A) by which the blade support component (21) and the blade engaging body (22, 22A) are in contact with the blade.

4. The vertical axis wind turbine (2) as claimed in claim 1, wherein the collar (19) includes a female thread part on an inner periphery of the collar (19), and the bolt is screw into the female thread part of the collar (19).

5. The vertical axis wind turbine (2) as claimed in claim 4, wherein the collar (19) includes a flange part at least at an end portion thereof opposite from the blade support component (21), and the flange part serves as the blade engaging body (22, 22A).

6. The vertical axis wind turbine (2) as claimed in any one of claims 1 to 5, wherein the bolt is a low-profile type bolt.

7. The vertical axis wind turbine (2) as claimed in any one of claims 1 to 6, comprising a solar power generation device.

8. The vertical axis wind turbine (2) as claimed in any one of claims 1 to 7, comprising a generator configured to generate power by rotation of the rotary shaft to which the blades are attached, and
one or both of a lighting facility configured to provide illumination using the power generated by the generator and a communication device configured to operate using the power generated by the generator.

## Patentansprüche

1. Vertikalachs-Windturbine (2) zur Erzeugung von Windenergie, wobei die Vertikalachs-Windturbine (2) umfasst: eine vertikale Drehwelle, eine Vielzahl von vertikalen Rotorblättern, die um die Drehwelle angeordnet sind, einen Arm, der die Vielzahl von vertikalen Rotorblättern an der Drehwelle befestigt, und
Blattbefestigungseinheiten (16a, 16b), die die Rotorblätter am Arm befestigen, wobei jede Blattbefestigungseinheit enthält:
eine Blattstützkomponente (21), die an einem Spitzenende des Arms angeordnet und auf einer drehpunktseitigen Oberfläche eines der Blätter gelagert ist;
**dadurch gekennzeichnet, dass** jede Blattbefestigungseinheit weiter enthält:
einen Kragen (19), der eine zylindrische Form aufweist und in ein Befestigungsloch eingeführt ist, das dieses Rotorblatt durchdringt;
einen Blatteingriffskörper (22, 22A), der getrennt von oder integriert mit dem Kragen (19) bereitgestellt und auf einer gegenüberliegenden Oberfläche dieses Rotorblattes zu der drehpunktseitigen Oberfläche gelagert ist; und
eine Schraube, die in den Kragen (19) eingesetzt ist, um eine axiale Kraft derart aufzubringen, dass dieses Rotorblatt zwischen der Blattstützkomponente (21) und dem Blatteingriffskörper (22, 22A) gehalten wird,
wobei der Kragen (19) die axiale Kraft stützt, die zwischen der Blattstützkomponente (21) und dem Blatteingriffskörper (22, 22A) wirkt.

2. Vertikalachs-Windturbine (2) nach Anspruch 1, wobei der Kragen (19) die Blattstützkomponente (21) und den Blatteingriffskörper (22, 22A) durchdringt.

3. Vertikalachs-Windturbine (2) nach Anspruch 1, wobei gegenüberliegende Endflächen des Kragens (19) in Kontakt mit Oberflächen der Blattstützkomponente (21) und des Blatteingriffskörpers (22, 22A) gebracht werden, durch die die Blattstützkomponente (21) und der Blatteingriffskörper (22, 22A) mit dem Rotorblatt in Kontakt sind.

4. Vertikalachs-Windturbine (2) nach Anspruch 1, wobei der Kragen (19) einen Innengewindeteil an einem inneren Umfang des Kragens (19) enthält, und die Schraube in den Innengewindeteil des Kragens (19) eingeschraubt ist.

5. Vertikalachs-Windturbine (2) nach Anspruch 4, wobei der Kragen (19) mindestens an einem Endabschnitt davon gegenüber der Blattstützkomponente (21) einen Flanschteil enthält, und der Flanschteil als Blatteingriffskörper (22, 22A) dient.

6. Vertikalachs-Windturbine (2) nach einem der Ansprüche 1 bis 5, wobei es sich bei der Schraube um eine Schraube mit niedrigem Profil handelt.

7. Vertikalachs-Windturbine (2) nach einem der Ansprüche 1 bis 6, umfassend eine Solarstromerzeugungsvorrichtung.

8. Vertikalachs-Windturbine (2) nach einem der Ansprüche 1 bis 7, umfassend einen Generator, der so eingerichtet ist, dass er durch Drehung der Drehwelle, an der die Rotorblätter befestigt sind, Strom erzeugt, und
eine oder beide unter einer Beleuchtungseinrichtung, die so eingerichtet ist, dass sie Beleuchtung unter Verwendung des von dem Generator erzeugten Stroms bereitstellt, und einer Kommunikationsvorrichtung, die so eingerichtet ist, dass sie unter Verwendung des von dem Generator erzeugten Stroms betrieben wird.

## Revendications

1. Éolienne à axe vertical (2) pour la génération d'énergie éolienne, l'éolienne à axe vertical (2) comprenant : un arbre rotatif vertical, une pluralité de pales verticales agencées autour de l'arbre rotatif, un bras fixant la pluralité de pales verticales à l'arbre rotatif, et
des unités de fixation de pale (16a, 16b) fixant les pales au bras, chaque unité de fixation de pale incluant :
un composant de support de pale (21) disposé à une extrémité de pointe du bras et posé sur une surface côté centre de rotation de l'une des pales ;
**caractérisé en ce que** chaque unité de fixation de pale inclut en outre :
un collier (19) présentant une forme cylindrique et inséré dans un trou de fixation pénétrant dans cette pale ;
un corps d'engagement de pale (22, 22A) prévu séparément du collier (19) ou d'un seul tenant et posé sur une surface de cette pale opposée à la surface côté centre de rotation ; et
une tige insérée dans le collier (19) pour appliquer une force axiale de manière à maintenir cette pale entre le composant de support de pale (21) et le corps d'engagement de pale (22, 22A),
dans laquelle le collier (19) supporte la force axiale agissant entre le composant de support de pale (21) et le corps d'engagement de pale (22, 22A).

2. Éolienne à axe vertical (2) selon la revendication 1, dans laquelle le collier (19) pénètre dans le composant de support de pale (21) et le corps d'engagement de pale (22, 22A).

3. Éolienne à axe vertical (2) selon la revendication 1, dans laquelle des faces d'extrémité opposées du collier (19) sont placées en contact avec des surfaces du composant de support de pale (21) et du corps d'engagement de pale (22, 22A) par lesquelles le composant de support de pale (21) et le corps d'engagement de pale (22, 22A) sont en contact avec la pale.

4. Éolienne à axe vertical (2) selon la revendication 1, dans laquelle le collier (19) inclut une partie filetée femelle sur une périphérie interne du collier (19), et la tige est vissée dans la partie filetée femelle du collier (19).

5. Éolienne à axe vertical (2) selon la revendication 4, dans laquelle le collier (19) inclut une partie de bride au moins au niveau d'une partie d'extrémité de celui-ci opposée au composant de support de pale (21), et la partie de bride sert de corps d'engagement de pale (22, 22A).

6. Éolienne à axe vertical (2) selon l'une quelconque des revendications 1 à 5, dans laquelle la tige est une tige de type à profil bas.

7. Éolienne à axe vertical (2) selon l'une quelconque des revendications 1 à 6, comprenant un dispositif de génération d'énergie solaire.

8. Éolienne à axe vertical (2) selon l'une quelconque des revendications 1 à 7, comprenant un générateur configuré pour générer de l'énergie par rotation de l'arbre rotatif auquel les pales sont fixées, et
l'un ou les deux d'une installation d'éclairage configurée pour fournir un éclairage à l'aide de l'énergie générée par le générateur et d'un dispositif de communication configuré pour fonctionner à l'aide de l'énergie générée par le générateur.
